**Europäisches Patentamt**

**European Patent Office**

**Office européen des brevets**

(19)

(11) Numéro de publication: **0 012 050**
**B1**

(12) # FASCICULE DE BREVET EUROPEEN

(45) Date de publication du fascicule du brevet: **30.11.83**

(51) Int. Cl.³: **H 05 B 7/02, H 01 R 3/08**

(21) Numéro de dépôt: **79400836.7**

(22) Date de dépôt: **09.11.79**

(54) **Electrode refroidie pour mise en contact avec un métal en fusion.**

(30) Priorité: **10.11.78 FR 7832208**

(43) Date de publication de la demande:
**11.06.80 Bulletin 80/12**

(45) Mention de la délivrance du brevet:
**30.11.83 Bulletin 83/48**

(84) Etats contractants désignés:
**DE GB IT SE**

(56) Documents cités:
**DE - C - 290 945**
**FR - A - 2 292 397**
**FR - E - 64 578**
**US - A - 3 375 314**
**US - A - 4 101 725**

(73) Titulaire: **INSTITUT DE RECHERCHES DE LA SIDERURGIE FRANCAISE (IRSID) France**
**185, rue Président Roosevelt**
**F-78105 Saint-Germain-en-Laye (FR)**

(72) Inventeur: **Lechevallier, Christian**
**26, rue des Blanches Terres**
**Trémery F-57000 Metz (FR)**
Inventeur: **Cordier, Jacques**
**2, rue Principale**
**F-57640 Sanry-les-Vigy (FR)**
Inventeur: **Antoine, Martine**
**22, rue des Loriots**
**Lorry-les Metz F-57000 Metz (FR)**

(74) Mandataire: **Maurette, Hélène et al,**
**Institut de Recherches de la Sidérurgie Française**
**IRSID 185, rue du Président Roosevelt**
**F-78105 Saint-Germain-en-Laye (FR)**

Courier Press, Leamington Spa, England.

Électrode refroidie pour mise en contact avec un métal en fusion

La présente invention concerne un dispositif de connexion électrique destiné à être mis en contact avec une masse métallique en fusion, par exemple un bain d'acier. Les dispositifs du genre précité sont généralement constitués d'un corps électroconducteur de forme allongée, implanté dans la paroi d'un récipient métallurgique en vue de procéder au traitement du métal qui y est contenu, par apport d'énergie électrique. Ces dispositifs constituent ainsi des électrodes, en contact par une extrémité avec le bain métallique, assurant de ce fait le passage du courant électrique qui traverse ce dernier.

Parmi les récipients métallurgiques susceptibles d'être équipés de telles électrodes, on peut citer, de façon non restrictive, les cuves à électrolyse dans la métallurgie des métaux non-ferreux, tels que l'aluminium, ou, en sidérurgie, les poches de traitement, de maintien en température, ou les fours de fusion électrique, notamment les fours à arcs à courant continu et, dans un domaine technique un peu plus éloigné, les fours de réchauffage de verre.

L'un problèmes essentiels qui se posent est celui de la tenue thermique de l'électrode dont une extrémité (dite nez), en contact direct avec la masse métallique en fusion, est soumise à des températures très élevés, lesquelles, notamment dans le cas de la fusion de l'acier, peuvent atteindre 1 800°C et même plus.

Parmi les solutions connues, certaines consistent en une modification de la géométrie de l'enceinte du four lui-même, de manière à créer localement un site d'implantation préférentiel de l'électrode, où la masse en fusion est sensiblement moins aggressive thermiquement que dans le reste du four -Brevet français n° 2 168 430, Brevet français n° 2 276 388, Brevet français n° 2 285 044-. Cependent, ce type de solution nécessite la présence permanente d'un pied de bain, ce qui pénalise notamment la souplesse d'utilisation du four.

D'autres solutions préfèrent implanter l'électrode directement au travers de la paroi réfractaire de la sole du four en faisant porter leur effort sur le refroidissement de l'électrode. On trouve alors deux familles technologiques, selon que l'électrode est équipée d'un circuit de refroidissement externe ou interne. Dans le premier cas, pour des raisons de sécurité, le circuit de refroidissement n'est généralement pas placé dans le revêtement réfractaire de la sole, mais à l'extérieur du four -Brevet français n° 1 538 996, Brevet français n° 2 292 367-. Cependant l'éloignement de l'embout de la source réfrigérante peut être alors à l'origine de la disparition ultérieure, par fusion, d'une partie importante de l'électrode, ce qui accroît d'autant la vulnérabilité en cet endroit de l'étanchéité de l'enceinte du four à l'égard de la masse en fusion qu'elle contient.

On a également proposé un système de refroidissement externe consistant à former une enveloppe de protection autour de l'électrode à l'aide d'un fluide de refroidissement. L'électrode n'est alors plus en contact direct avec la masse en fusion, ce qui limite le choix du fluide refroidissant à un composé électroconducteur.

La seconde famille s'affranchit de telles sujétions puisqu'il est possible dans ce cas d'amener le fluide refroidissant au voisinage immédiat du nez de l'électrode.

Toutefois, la mise en oeuvre demeure délicate pour des raisons de sécurité et d'accessibilité nez à refroidir. En effet, une usure, même réduite de ce dernier, risquerait de détruire le système de refroidissement en le mettant à jour, entraînant de ce fait un danger d'introduction brutale du fluide réfrigérant dans la masse métallique en fusion.

La présente invention a pour but une nouvelle solution assurant la tenu thermique des électrodes du type considéré en évitant les inconvénients ou les dangers de solutions connues.

Un autre but de l'invention est d'assurer la tenue thermique de ces électrodes grâce à un refroidissement efficace mettant en oeuvre une technique récente de transfert de chaleur. Un autre but de l'invention est d'assurer la tenue thermique de ces électrodes en conjugant des moyens d'évacuation rapide de la chaleur avec des moyens limitant les possibilités d'échauffement.

Avec ces objectifs en vue, l'invention a pour objet un dispositif de connexion électrique comprenant, d'une part, un corps électroconducteur de forme allongée destiné à être mis au contact à l'une de ses extrémités, avec une masse métallique en fusion et, d'autre part, des moyens de refroidissement disposés extérieurement audit corps électroconducteur, dispositif caractérisé en ce que les moyens de refroidissement sont distants du corps électroconducteur et reliés à lui par des moyens de transfert de chaleur fonctionnant par vaporisation et condensation d'un fluide caloporteur circulant en circuit fermé et en ce que le corps électroconducteur présente, à son extrémité destinée à être mise en contact avec la masse en fusion, des moyens pour réduire dans son voisinagé les mouvements de convection de ladite masse en fusion.

Une caractéristique de l'invention est que lesdits moyens de transfert de chaleur sont des dispositifs mieux connus sous la dénomination "Caloduc".

Selon une réalisation, les moyens de transfert de chaleur sont constitués par au moins un caloduc de forme allongée dispose longitudinalement dans le corps électroconducteur et ayant une longueur supérieure à celle de celui-ci, de manière à présenter une partie terminale libre dépassant du côté opposé à l'extrémité devant être mise au contact avec la masse métallique en fusion, ladite partie terminale étant incorporée dans les moyens de refroidissement.

Selon une autre disposition avantageuse, complémentaire à la première et permettant de limiter l'échauffement du dispositif, les moyens permettant de réduire les mouvements de convection de la masse en fusion au voisinage immédiat du dispositif, se présentent sous la forme d'une pluralité d'éléments réfractaires longitudinaux et parallèles entre eux.

Comme on l'aura sans doute déjà compris, l'invention consiste, dans l'une de ses caractéristiques essentielles, à amener artificiellement la source chaude, à savoir le nez de l'électrode, à un circuit de refroidissement éloigné de l'électrode, c'est-à-dire disposé en dehors du four, donc dans un endroit sûr et facile d'accès.

Les inventeurs se sont ainsi écartés des solutions antérieures qui étaient toutes basées sur une conception en deux éléments constitutifs—électrode et moyen de refroidissement—pour aboutir à une conception originale en quatre éléments, les éléments supplémentaires étant un moyen intermédiaire de transfert de chaleur placé l'électrode et le refroidisseur, ainsi que des moyens ralentissant localement les mouvements de convection de la masse métallique en fusion au voisinage du nez de ladite électrode. Le rôle de ce moyen intermédiaire est de constituer un court-circuit thermique qui opère de façon que tout se passe comme si le nez de l'électrode se trouvait être translaté en dehors de l'électrode. Dans ces conditions, le nez de l'électrode peut être aisément refroidi au sein de tout système approprié, tel un échangeur à surface de type connu ou habituel.

Le moyen intermédiaire de transfert de chaleur assurant le court-circuit thermique recherché est avantageusement constitué d'un ou plusieurs caloducs incorporés à l'électrode.

Le principe du "caloduc", étant déjà connu et ne faisant pas partie de l'invention, ne fera pas ici l'objet d'une description détaillée. Cette dernière pourra être trouvée dans une documentation abondante, dont on signale entre autre, les brevets français n° 2 241 052 et n° 2 217 653, ainsi que l'article de Monsieur Y. MARTINET paru dans la Revue Générale Thermique Française, n° 192 de décembre 1977, page 865 à 880.

On rappelle simplement que le "caloduc", ou plus généralement tout système à "caloduc" est un dispositif à vaporisation constitué par un réservoir en matériau bon conducteur de la chaleur et formant une enceinte fermée, dont la paroi intérieure présente une structure capillaire par rainurage ou placage d'un maillage métallique par exemple. L'enceinte contient un fluide caloporteur dont la nature et la quantité sont choisies de manière que, dans les conditions opératoires, il puisse se trouver à l'état d'équilibre liquide-vapeur, la phase liquide saturant au mieux la structure capillaire.

On rappelle également son principe de fonctionnement: lorsqu'une extrémité de l'enceinte est chauffée, le fluide caloporteur qui se trouve dans la zone correspondante (zone d'évaporation) passe à l'état vapeur. Celle-ci s'écoule alors naturellement dans le sens de la chute de température vers l'autre extrémité du tube qui est refroidie, par exemple dans un échangeur. La chaleur de vaporisation est libérée lorsque la vapeur se consense à l'extrémité froide (zone de condensation) et les forces de capillarité ramènent, par la structure capillaire périphérique, le liquide condensé vers la zone d'évaporation. Il s'établit ainsi un cycle permanent d'évaporation-condensation, entraînant un transfert d'énergie qui ne nécessite aucun apport de travail de l'extérieur.

On rappelle enfin que la Caloduc présente la propriété remarquable de conduire la chaleur de l'ordre de 1 000 fois mieux que le cuivre. En fonctionnement, said température est pratiquement égale en tous points à sa surface, ce qui justifie son qualificatif de "court-circuit" thermique. Les caloducs reflètent une technique industrielle assez récente. Grâce notamment à leur capacité d'être multiforme (cylindre, plaques, etc...) ils trouvent déjà des applications diverses dans des domaines variés, tels que les fours isothermes, le conditionnement de l'air, la récupération thermique des fumées, les sondes cryogéniques à usage médical, la cuisson des aliments ou le refroidissement de moules comlexes, à l'exemple des moules pour la fabrication de pièces de moteurs à explosion destinés à l'automobile.

L'invention réside en une utilisation nouvelle du "caloduc" en tant que composant d'un ensemble fonctionnel assurant la tenue thermique d'une électrode destinée à être mise au contact d'une masse métallique en fusion, contenue dans un récipient métallurgique, comme un four à arc à courant continu par example, ainsi qu'en l'utilisation de moyens ralentissant localement les mouvements de convection de lamasse métallique en fusion au voisinage du nez de ladite électrode.

Le caloduc est agencé entre l'extrémité chaude de l'électrode et la source réfrigérante, permettant ainsi au plan de la thermique une translation apparente de l'extrémité chaude à l'extérieur de l'électrode, ou exprimé différemment, un apport de frigories à l'endroit précis où elles sont le plus nécessaires, tout en maintenant la source froide éloignée de l'électrode.

Cette utilisation nouvelle reflète une solution sûre au problème du refroidissement de l'électrode, puisque la source froide, constituée par un échangeur de chaleur à l'extrémité "froide" du "caloduc", est non seulement, comme on l'a dit, placée à l'extérieur du four, mais que son éloignement peut être relativement important. On sait en effet que la résistance thermique du "caloduc" est indépendante de la longueur totale de l'appareil et qu'ainsi le "caloduc", comparé à un autre moyen de transport de chaleur, est d'autant plus intéressant que sa longueur est grande.

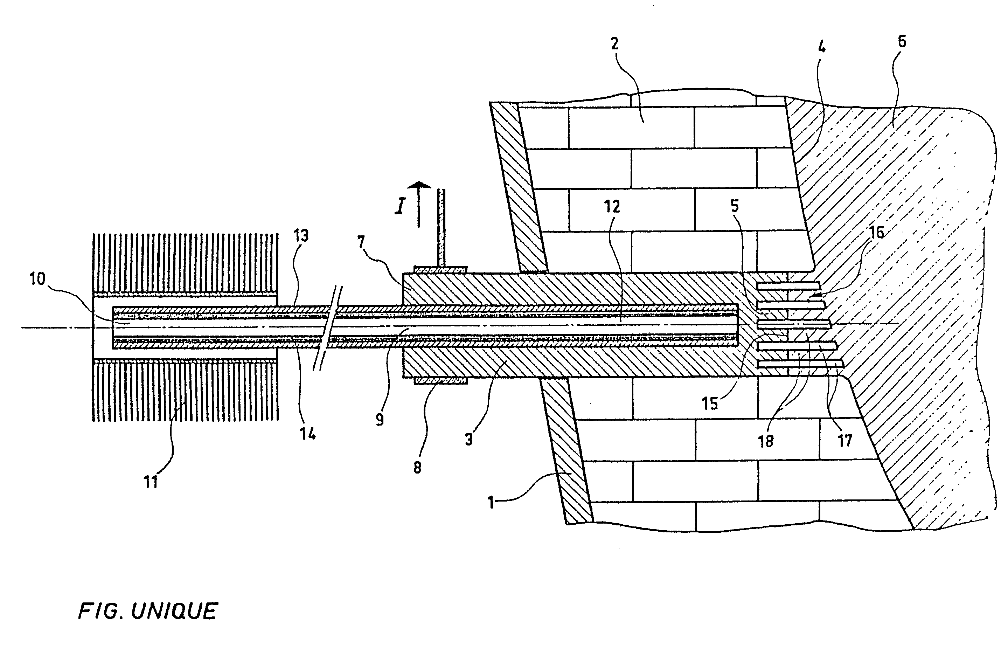

L'invention sera bien comprise et d'autres aspects et avantages ressortiront plus clairement au vu de la description qui suit, donnée à tire d'exemple et en référence à la figure unique annexée représentant une vue schématique en couple longidinal d'une électrode de sole de four à arc à courant continu équipé d'un appareil de refroidissement à "caloduc".

On a représenté en 1 l'enveloppe métallique et en 2 le revêtement réfractaire de la sole du four au travers desquels a été placée l'électrode 3.

Comme on le voit, l'électrode se présente sous la forme d'un corps allongé comportant une partie terminale, ou embout 5, en contact avec la masse en fusion 6 contenue dans le four, et un prolongement extérieur 7 pris dans un collier en cuivre 8 pour le retour du courant électrique, dans le sens indiqué par la flèche, vers une alimentation électrique non représentée.

De plus, le corps de l'électrode est creux axialement jusqu'au voisinage de l'embout 5 de manière à constituer un fourreau pour le système de refroidissement à "caloduc" que l'on va décrire à présent. Le "caloduc", référencé un 9, se présente sour la forme d'un cylindre allongé, de longueur supérieure à celle de l'électrode 3. Sa partie terminal libre 10, dépassant de l'électrode, est incorporée à un échangeur de chaleur 11. Le choix du type d'échangeur n'est pas imposé. Il peut être, comme le montre la figure, du type "a ailettes". Le refroidissement peut se faire simplement à l'aire par convection naturelle. On peut également prévoir un refroidissement forcé par un agent liquide ou gazeux, la partie du "caloduc" noyée dans l'électrode (référencée en 12), et en particulier l'extrémité voisine de l'embout, constitue la zone d'évaporation, et sa partie terminale libre 10, la zone de condensation. Compte tenu des températures régnant au niveau de l'embout, et qui sont de l'ordre de 500°C—700°C, le fluide caloporteur peut être mercure, du potassium, ou du sodium. Pour des raisons de simplicité de mise en oeuvre, on emploiera de préférence du mercure. Dans ce cas, l'enveloppe 13 du "caloduc", ainsi que sa structure capillaire intérieure, représentée en 14, sont en un alliage d'acier inoxydable avec du magnésium et du titane. L'électrode 3 peut être faite d'un seul matériau, par exemple de l'acier ou du cuivre. De préférence, elle est de structure composite: un embout 5 en acier, pour mieux résister à l'agressivité thermique de la masse en fusion 6, et le reste du corps, dans lequel est noyé le "caloduc", en cuivre ou tout autre matériau bon conducteur de la chaleur et de l'électricité.

Il doit être noté, qu'en général, la fusion de l'embout n'est pas totalement évitée. Mais cette fusion n'a lieu que momentanément au cours de la période transitoire initiale de mise en régime à laquelle succède une phase permanente correspondant à une stabilisation de la position du front de solidification, autrement dit de la surface frontale 15.

Les études ont montré que le mode de chauffage de l'embout 5 en contact avec la masse en fusion 6, est essentiellement de nature convective. Toute disposition visant à contrarier les mouvements de convection du métal liquide 6 au voisinage de la surface frontale 15 va donc dans le sens d'une réduction de l'échauffement de l'embout. Il en est ainsi notamment de la formation naturelle du puits liquide 16 consécutive à la fusion temporaire d'une partie de l'embout. Mais ce phénomène n'est pas très important en raison de la profondeur généralement faible du puits 16 par rapport à son diamètre, et ceci d'autant plus qu'on s'efforce habituellement de limiter au maximum la fusion initiale de l'embout afin de maintenir la surface frontale 15 la plus voisine possible de la surface interne du revêtement réfractaire, désigné par 4.

Conformément à un autre aspect de l'invention, des moyens sont prévus sur l'embout 5 pour ralentir localement les mouvements de convection de la masse métallique en fusion. Comme le montre la figure, un exemple de réalisation consiste à pourvoir l'embout d'une pluralité de tiges ou plaquettes 17 en matière réfractaire, (avantageusement de même nature que le revêtement réfractaire 2 de la sole du four) qui le prolongent en direction du bain 6. Ces tiges ou plaquettes délimitent entre elles des espaces 18 longs et étroits, peu favorables au développement de courants de convection de la masse en fusion. Elle peuvent être apparentes sur l'électrode neuve, ou de préférence, par mesure de sécurité lors des opérations de manutention, entièrement incorporées dans l'embout. Les espaces 18 apparaîtront en cours d'utilisation de l'électrode, grâce à la fusion partielle initiale de l'embout. Au besoin, on peut favoriser la formation de ces espaces en les comblant initialement par un matériau, tel que du carton, qui se détruira facilement au contact la masse en fusion.

Bien entendu, l'invention ne saurait se limiter à l'exemple décrit.

Il en est ainsi par exemple des moyens permettant de réduire les mouvements de convection de la masse en fusion, qui peuvent présenter de nombreuses variantes de réalisation. De même, si l'invention trouve une application préférentielle en tant qu'électrode de sole pour un four à arc à courant continu, il ne peut être exclu de la destiner à d'autres utilisations, pour lesquelles on recherche une mise en contact entre une masse métallique en fusion et une électrode, ou plus généralement un dispositif devant assurer sans difficulté le passage du courant électrique.

## Revendications

1. Dispositif de connexion électrique comprenant, d'une part, un corps électroconducteur de forme allongée, destiné à être mis en contact, par l'une de ses extrémités, avec une masse métallique en fusion, et, d'autre part, des moyens de refroidissement disposés extérieurement audit corps, dispositif caractérisé en ce que les moyens de refroidissement (11) sont placés à distance du corps électroconducteur (3) et reliés à lui par des moyens de transfert de chaleur (9) fonctionnant par vaporisation et condensation d'un fluide caloporteur circulant en circuit fermé, et en ce que le corps électroconducteur (3) présente, à son extrémité (5) destinée à être mise en contact avec la masse en fusion (6), des moyens (17) pour réduire dans son voisinage les mouvements de convection de ladite masse en fusion.

2. Dispositif selon la revendication 1, caractérisé en ce que les moyens de transfert de chaleur sont constitués par au moins un caloduc (9) de forme allongée disposé longitudinalement dans le corps électroconducteur (3) et ayant une longueur supérieure à celle de ce dernier, de manière à présenter une partie terminale libre (10) dépassant du côté opposé à celui de l'extrémité devant être mise au contact de la masse en fusion, ladite partie terminale étant incorporée aux moyens de refroidissement (11).

3. Dispositif selon la revendication 1 ou 2, caractérisé en ce que les moyens de refroidissement (11) sont constitués par un échangeur de chaleur à ailettes.

4. Dispositif selon la revendication 1, caractérisé en ce que les moyens pour réduire les mouvements de convection de la masse en fusion au voisinage de l'extrémité (5) de l'électrode sont constitués par une pluralité d'éléments réfractaires longitudinaux (17) parallèles entre eux et prolongeant le corps électroconducteur (3) en direction de la masse en fusion (6).

5. Dispositif selon la revendication 4, caractérisé en ce que les éléments réfractaires (17) sont entièrement noyés dans le corps électroconducteur (3).

6. Dispositif selon la revendication 5, caractérisé en ce que les éléments réfractaires (17) sont séparés entre eux, au moins au voisinage de l'extrémité (5) du corps électroconducteur (3), par un matériau qui se détruit facilement au contact de la masse en fusion (6).

7. Utilisation du dispositif, selon l'une quelconque des revendications précédentes, en tant qu'électrode de sole de four à arc à courant continu.

## Patentansprüche

1. Elektrische Verbingungsvorrichtung bestehend, einerseits aus einem elektrisch leitendem Körper, länglicher Form, der bestimmt ist mittels einem Ende, mit einer schmelzflüssigen Metallmasse in Berührung zu treten, und anderseits aus Kühlmitteln die ausserhalb des besagten Körpers angebracht sind, Vorrichtung dadurch gekennzeichnet dass die Kühlmittel (11) sich in Abstand von dem elektrisch leitenden Körper (3) befinden und mit diesem durch Wärmeübertragungsmittel (9), die durch Verdampfung und Kondensation einer, in geschlossenem Kreislauf befindlichen, wärmeabführenden Flüssigkeit funktionieren, in Verbindung stehen, und dadurch dass der elektrisch leitende Körper (3) an seinem Ende (5) das mit der schmelzflüssigen Metallmasse (6) in Berührung kommen soll, Mittel (17) aufweist, um in siener Nähe die Wärmeströmungsbewegungen der besagten Masse zu mindern.

2. Vorrichtung nach Anspruch 1, dadurch gezeichnet dass die Wärmeübertragungsmittel durch mindestens ein Wärmeleiter (9) länglicher Forme gebildet sind, der längs im elektrisch leitenden Körper (3) angeordnet ist und eine grössere Länge als diejenige des Letzteren besitzt, um einen freien Endteil (10) aufzuweisen welcher auf der entgegengesetzten Seite, das Ende das mit der schmelzflüssigen Masse in Berührung kommen soll, überragt, der besagte Endteil sich dabei in den Kühlmitteln (11) eingebaut befindet.

3. Vorrichtung nach den Ansprüchen 1 oder 2, dadurch gekennzeichnet dass die Kühlmittel (11) durch ein mit Rippen versehenen Wärmeaustauscher gebildet sind.

4. Vorrichtung nach Anspruch 1 dadurch gekennzeichnet dass die Mittel um die Wärmeströmungsbewegungen der schmelzflüssigen Masse, in Nähe des Elekrodenen des (5) zu mindern, durch eine Vielzahl länglicher feuerfester Teile (17) gebildet sind, die parallel zueinander angelegt sind und den elektrisch leitenden Körper (3) in Richtung der schmelzflüssigen Masse (6) verlängeren.

5. Vorrichtung nach Anspruch 4, dadurch gekennzeichnet dass die feuerfesten Teile (17) vollständig im elektrisch leitenden Körper (3) versenkt sind.

6. Vorrichtung nach Anspruch 5, dadurch gekennzeichnet dass die feuerfesten Teile (17), mindestens in der Nähe des Endes (5) des elektrisch leitenden Korpers (3), durch einen Werkstoff der sich bei Berührung der schmelzflüssigen Masse (6) leicht zerstört, voneinander getrennt sind.

7. Benutzung der Vorrichtung nach irgenwelcher der vorstehenden Ansprüche, als Elektrode einer Ofensohle mit Gleichstrombogen.

## Claims

1. An electrical connecting device comprising, (a) an elongated electroconductive body so designed that one of its ends reaches a mass of molten metal and, (b) cooling means arranged externally to said body, device characterized in that the cooling means (11) is placed some distance from the electroconductive body (3) and connected thereto by heat-transfer means functioning through vaporization and condensation of a heat-transfer fluid flowing in a closed loop system, and also in that the electroconductive body (3) includes, at its end (5), designed so as to reach the mass of molten metal (6), the means (17) to lessen in its vicinity the convectional movements of the said molten mass.

2. A device, according to claim 1, characterized in that the heat-transfer means consists of at least one elongated heat pipe (9) arranged lengthwise in the electroconductive body (3), its length being greater than the latter's and whose free-end portion (10) protrudes from the side opposite to the end which is to reach the mass of molten metal, the said end position being built into the cooling means (11).

3. A device, according to claim 1, or 2, characterized in that the cooling means (11) consists of a ribbed heat exchanger.

4. A device, according to claim 1, characterized in that the means for lessening the convectional movements of the mass of molten metal in the vinicity of the electrode end (5), consists of a plurality of paralle, lengthwise, refractory elements (17), extending the electroconductive body (3) towards the mass of molten metal (6).

5. A device, according to claim 4, characterized in that the refractory elements (17) are fully embedded in the electroconductive body (3).

6. A device, according to claim 5, characterized in that the refractory elements (17) are separate at least in the vicinity of the end of the electroconductive body (3), by a material that readily disintegrates on reaching the mass of molten metal (6).

7. Use of the device, according to any of the foregoing claims, as an electrode for the hearth of a direct-current arc furnace.

FIG. UNIQUE

0012050